# EUROPEAN PATENT SPECIFICATION

(11) **EP 2 121 352 B1**
(45) Date of publication and mention of the grant of the patent: **02.06.2010**
(21) Application number: 08712582.9
(22) Date of filing: 14.02.2008
(51) Int. Cl.: B60C 11/24

(54) **DEVICE FOR INSPECTING A VEHICLE TYRE**
VORRICHTUNG ZUR INSPEKTION EINES FAHRZEUGREIFENS
DISPOSITIF POUR L'INSPECTION D'UN PNEU DE VÉHICULE

(30) Priority: 23.02.2007 NL 1033445
(43) Date of publication of application: 25.11.2009
(73) Proprietor: Stms Duiven B.v., 7009 AW Doetinchem (NL)
(72) Inventor: VAN LONDEN, Jan, Casper, Bernardus, Josef, NL-7009 AW Doetinchem (NL)
(74) Representative: Dokter, Hendrik Daniel
(86) International application number: PCT/NL2008/000042
(87) International publication number: WO 2008/103026

(56) References cited:
- EP-A- 1 542 035
- US-A1- 2002 036 039
- US-A1- 2002 095 980
- US-B1- 6 609 417
- US-B1- 7 124 629

## Description

The invention relates to a device for inspecting the profile in the tread of a tyre of a vehicle, comprising sensor means for collecting information at the location of the vehicle relating to the profile depth of the tyre.

From an environmental and economic viewpoint it is very important to know the profile depth of the tyres of a vehicle, in particular of a truck.

A car with worn tyres or tyres with an irregularly worn tread has an increased risk of burst tyres, with all the associated risks of traffic jams or serious personal accidents and economic damage.

Inspecting the tread of the tyres of a truck is usually carried out at determined intervals by specialized personnel at a fixed location, for instance on the premises of a fleet manager.

Such a periodic inspection has a number of drawbacks.
The inspections are carried out manually. The quality of the tread of a tyre can be inspected visually by comparing the depth of the grooves forming the profile in this tread to the height of elevated ribs present for this purpose in the grooves, or the quantity can be measured in tactile manner using a feeler intended for this purpose.

Having a person carry out a periodic manual inspection of the tyres of a vehicle is labour-intensive, and therefore relatively expensive, and moreover has the drawback that not all the vehicles involved will usually be present at the time of the inspection. Document US-A-2002/036039 discloses the features of the preamble of claim 1.

It is an object of the invention to provide a device for inspecting the tread profile of the tyre of a vehicle which makes it possible to carry out this inspection in automated manner and remotely from this vehicle.

This object is achieved, and other advantages gained, with a device of the type stated in the preamble of claim 1, wherein according to the invention the sensor means are adapted for permanent attachment to the vehicle.

In principle, sensor means permanently attached to the vehicle for the purpose of collecting information relating to the profile depth of a tyre make the periodic manual inspection by a specialized person unnecessary.

The sensor means in a device according to the invention are for instance selected from the group of optical, electrical, tactile and acoustic sensor means for performing a direct measurement of the profile depth.

Optical sensor means for instance comprise a laser diode for transmitting a light beam onto the surface of the tyre while forming a light-spot on the tyre, and a position-sensitive detector for projecting the light-spot thereon via a lens.

Using such sensor means the distance between the detector and the tyre can be determined from the position of the projected light-spot and the geometry of the sensor configuration, and the depth of a profile can be determined from the difference in the measured values for the distance from the detector to the tread and to the bottom of a profile groove.

Electrical sensor means for instance comprise a coil for generating an alternating magnetic field which induces an eddy current in the steel reinforcement of a tyre. This eddy current results in a change in the impedance of the coil.

Using such sensor means the distance between the detector and the tyre can be determined from the measured impedance of a coil pressed onto the tread, and the profile depth can be determined by subtracting from the measured distance the distance from the profile bottom to the reinforcement known from the specifications of a tyre.

Tactile sensor means comprise for instance a feeler which is controllable by an electronic robot arm and which is placed successively on the tread of a tyre and moved over this tread until the feeler drops into a groove.

Using such sensor means the height distance travelled, and thereby the profile depth, can be determined in combination with per se known resistive or inductive distance measuring means.

Acoustic sensor means comprise for instance an acoustic transmitter, an acoustic receiver and a clock for performing a duration measurement.

Using such sensor means the distance from the receiver to respectively the tyre and to the bottom of a groove can be determined from the measured duration of an acoustic signal transmitted by the transmitter and the speed of sound, and the depth of a profile can be determined from the difference in the measured values for the distance from the receiver to the tread and to the bottom of a profile groove.

In yet another embodiment of a device according to the invention the sensor means comprise a camera for performing an indirect measurement of the profile depth.

Using a camera an image of a part of the tread can be recorded, from which the profile depth can be determined by means of image processing techniques.

In a device according to the invention the sensor means are preferably accommodated in a dustproof and moisture-proof sealable housing in the immediate vicinity of the tyre.

Such a housing, which is opened only to collect the information when the vehicle is stationary, prevents failure of the sensor means due to contamination or thrown-up pebbles, or due to the effect of moisture.

In a preferred embodiment a device according to the invention further comprises sensor means which can be permanently coupled to the tyre for the purpose of collecting information relating to the pressure of the tyre.

It is known that a car with tyres under-inflated by about 15% uses about 2% more fuel than the same car with tyres at the prescribed pressure. Under-inflation of tyres also results in accelerated wear of these tyres. It is known that a continuous under-inflation of 20% to 30% relative to the prescribed value for the tyre pressure may result in a reduction in the lifespan of a tyre of 25% to 50%. Too low a tyre pressure also results in a longer braking distance, a greater chance of skidding, an increased chance of burst tyres, a decrease in the ability to absorb irregularities in a road surface, and a considerably reduced road holding.

In yet another embodiment the sensor means can be coupled by means of an interface to a network for data communication.

The network is for instance selected from the group of networks for data communication in accordance with a LIN, a MOST or an IDB 1394-protocol.

In a practically advantageous embodiment the network is from the group of networks for data communication in accordance with a CAN or a FlexRay-protocol.

A network in accordance with a CAN-protocol is suitable for data communication at a speed of 1 Mb/s, with advanced sensors in real-time applications. A CAN network further provides the advantage that it is especially designed for the vehicle industry.

A network in accordance with a FlexRay-protocol is suitable for data communication at a speed of 10 Mb/s.

In an embodiment of a device according to the invention in which the advantages of the invention are particularly utilized, there are provided transmitter means for transmitting the collected information to an inspection station, receiver means for receiving the collected information at the inspection station and processing means for processing the collected information.

The transmitter and receiver means comprise for instance means for mobile data communication, or are adapted to transmit and receive the collected information via at least one communication satellite.

Means for mobile data communication are for instance adapted for data communication via a GSM network (GPRS) or a UMTS network.

A device according to an embodiment of the invention, in which transmitter means, receiver means and processing means are provided, provides the option of for instance collecting the information about a truck relating to desired and current tyre pressure and profile depths, mileages, tyre prices, wheel positions, tyre sizes, tyre types, and transmitting this to the inspection station, where a fleet manager can take action if necessary in order to regroove or replace a tyre, or to send the driver a signal that the tyre pressure must be brought to the required level.

The invention will be elucidated hereinbelow on the basis of exemplary embodiments, with reference to the drawings.

In the drawings:
Fig. 1 shows a greatly simplified schematic representation of a first embodiment of a device according to the invention,
Fig. 2a, b, c, d show several recordings of the tread of a tyre, made with a camera for the device shown in fig. 1.

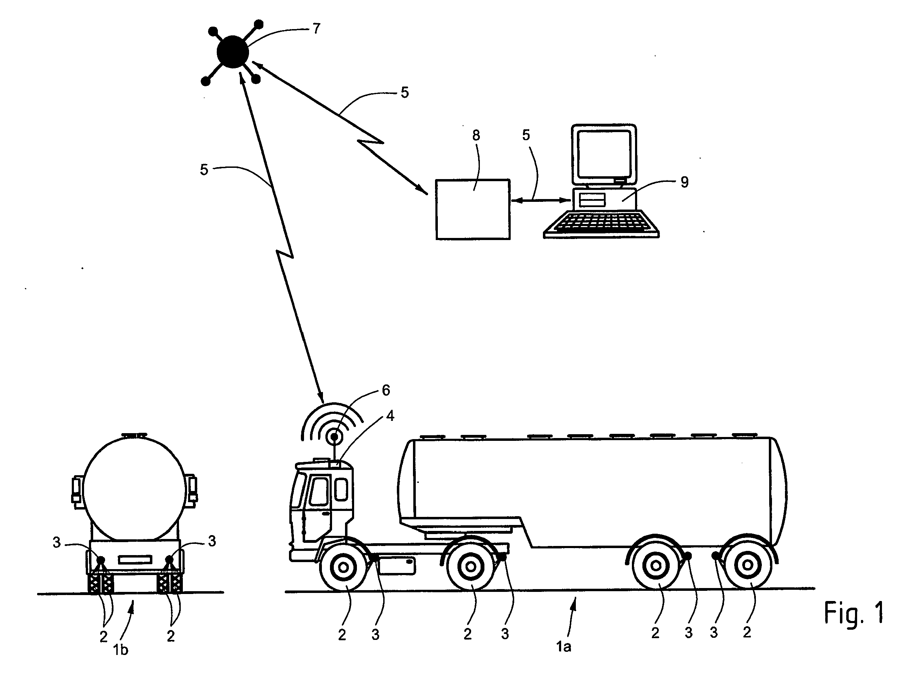

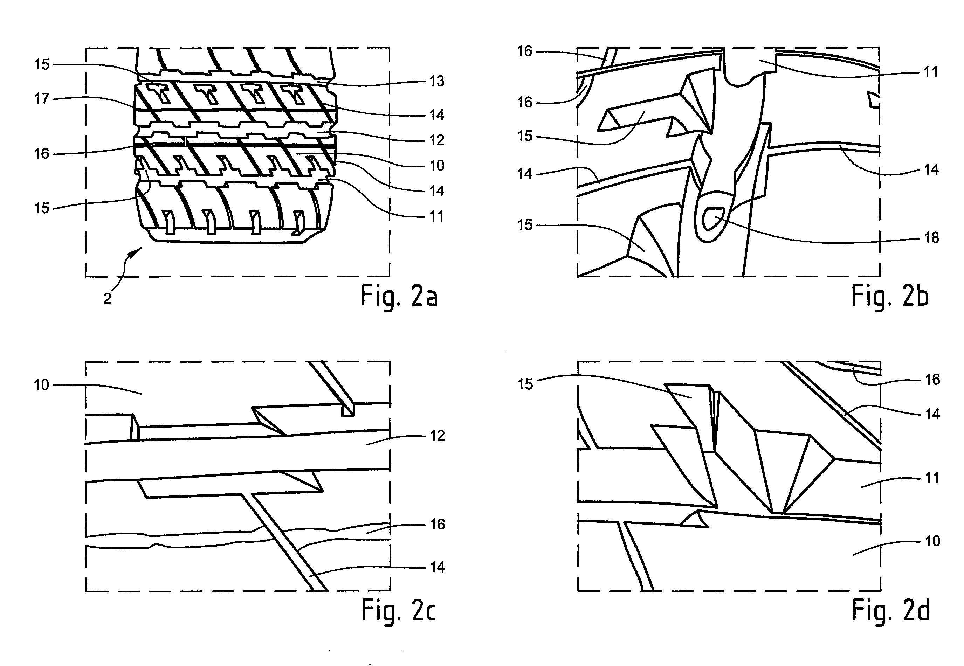

Fig. 1 shows a tanker which is provided at each of its tyres 2 with a dustproof and moisture-proof housing in which a camera 3 is accommodated for making a recording of the tread (shown in fig. 2a-d) of the respective tyre 2. The information collected by each of the cameras 3 is transmitted to a transmitter 6 via the CAN network of tanker 1a, b and a processing unit 4 in the cab, which transmitter converts the information into a signal (indicated by arrows 5) which is sent via a satellite 7 to a receiver 8, from where the signal 5 is transmitted to a central processing unit 9.

Fig. 2a shows a recording of tread 10 of a new tyre 2, made in radial direction with a camera mounted at a distance of 30 cm above the tread. The recording shows two peripheral grooves 11, 13 on either side of a central peripheral groove 12, and transverse grooves 14 and T-shaped profile parts 15 extending obliquely from these longitudinal grooves 11, 12, 13. Marking lines 16, 17 are arranged on tread 10 in peripheral direction in order to facilitate the comparison of this recording with the recordings shown under 2b - 2d.

Fig. 2b shows a recording of tread 10 of tyre 2, made at an angle of 45° relative to the radial direction and 90° relative to the axial direction of the tyre, using a camera mounted at a distance of 4 cm above tread 10. The recording shows the peripheral groove 11 depicted in fig. 2a, in which can be seen a so-called profile indicator 18, a transverse groove 14, T-shaped profile parts 15 and marking line 16.

Fig. 2c shows a recording of tread 10 of tyre 2, made in radial direction using a camera which was mounted at a distance of 4 cm above tread 10. The recording shows the central peripheral groove 12 depicted in fig. 2a.

Fig. 2d shows a recording of tread 10 of tyre 2, made at an angle of 45° relative to the radial direction and 45° relative to the axial direction of the tyre, using a camera mounted a distance of 4 cm above tread 10. The recording shows the peripheral groove 11 depicted in fig. 2a and a T-shaped profile part 15.

In a measuring device according to the invention the geometry of the camera arrangement is known, so that it is possible using per se known image processing techniques to determine the depth of grooves 11, 12, 13 from the recordings made at different angles using a camera. It has been found that the depth of a groove can be determined to an accuracy of 0.1 mm to an accuracy of 0.6 degrees in the value of the angle at which the camera is arranged. The accuracy requirement for this latter angle can be relaxed considerably if the device is calibrated, wherein use is for instance made of known parameters of the relevant tyre.

## Claims

1. Device for inspecting the profile in the tread of a tyre (2) of a vehicle (1a, b), comprising sensor means (3) for collecting information (5) at the location of the vehicle (1a, b) relating to the profile depth of the tyre (2), **characterized in that** the sensor means (3) are adapted for permanent attachment to the vehicle (1a, b).

2. Device as claimed in claim 1, **characterized in that** the sensor means (3) are selected from the group of optical, electrical, tactile and acoustic sensor means for performing a direct measurement of the profile depth.

3. Device as claimed in claim 1, **characterized in that** the sensor means (3) comprise a camera for performing an indirect measurement of the profile depth.

4. Device as claimed in any of the claims 1-3, **characterized in that** the sensor means (3) are accommodated in a dustproof and moisture-proof housing in the immediate vicinity of the tyre (2).

5. Device as claimed in any of the claims 1-4, **characterized in that** it further comprises sensor means which can be permanently coupled to the tyre (2) for the purpose of collecting information relating to the pressure of the tyre (2).

6. Device as claimed in any of the claims 1-5, **characterized in that** the sensor means (3) can be coupled by means of an interface to a network for data communication.

7. Device as claimed in claim 6, **characterized in that** the network is selected from the group of networks for data communication in accordance with a LIN, a MOST or an IDB 1394-protocol.

8. Device as claimed in claim 6, **characterized in that** the network is from the group of networks for data communication in accordance with a CAN or a FlexRay-protocol.

9. Device as claimed in any of the claims 1-8, **characterized in that** there are provided
transmitter means (6, 7) for transmitting the collected information (5) to an inspection station,
receiver means (8) for receiving the collected information (5) at the inspection station, and
processing means (4, 9) for processing the collected information (5).

10. Device as claimed in claim 9, **characterized in that** the transmitter and receiver means comprise means for mobile data communication.

11. Device as claimed in claim 9, **characterized in that** the transmitter and receiver means are adapted to transmit and receive the collected information via a communication satellite (7).

## Patentansprüche

1. Vorrichtung zur Prüfung des Profils in der Lauffläche eines Reifens (2) eines Fahrzeuges (1a, b), umfassend Sensormittel (3) für das am Ort des Fahrzeuges (1a, b) Sammeln von Informationen (5) in Bezug auf die Profiltiefe des Reifens (2), **dadurch gekennzeichnet, dass** die Sensormittel (3) für dauerhafte Befestigung am Fahrzeug (1a. b) eingerichtet sind.

2. Vorrichtung nach Anspruch 1, **dadurch gekennzeichnet, dass** die Sensormittel (3) aus der Gruppe optischer, elektrischer, taktiler, und akustischer Sensormittel zur Durchführung einer direkten Messung der Profiltiefe ausgewählt sind.

3. Vorrichtung nach Anspruch 1, **dadurch gekennzeichnet, dass** die Sensormittel (3) eine Kamera zur Durchführung einer indirekten Messung der Profiltiefe umfassen.

4. Vorrichtung nach einem der Ansprüche 1-3, **dadurch gekennzeichnet, dass** die Sensormittel (3) in einem staub- und wasserdichten Gehäuse in der unmittelbaren Nähe des Reifens (2) aufgenommen sind.

5. Vorrichtung nach einem der Ansprüche 1-4, **dadurch gekennzeichnet, dass** diese weiterhin dauerhaft mit dem Reifen (2) verbindbare Sensormittel für das Sammeln von Informationen in Bezug auf die Spannung des Reifens 2) umfasst.

6. Vorrichtung nach einem der Ansprüche 1-5, **dadurch gekennzeichnet, dass** die Sensormittel (3) mittels einer Schnittstelle mit einem Netzwerk für Datenkommunikation verbindbar sind.

7. Vorrichtung nach Anspruch 6, **dadurch gekennzeichnet, dass** das Netzwerk aus der Gruppe von Netzwerken für Datenkommunikation nach einem LIN-, einem MOST- oder einem IDB 1394-Protokoll ausgewählt wurde.

8. Vorrichtung nach Anspruch 6, **dadurch gekennzeichnet, dass** das Netzwerk aus der Gruppe von Netzwerken für Datenkommunikation nach einem CAN- oder einem FlexRay-Protokoll ausgewählt wurde.

9. Vorrichtung nach einem der Ansprüche 1-8, **dadurch gekennzeichnet, dass**
Sendemittel (6, 7) zum Senden der gesammelten Informationen (5) zu einer Prüfstation,
Empfangsmittel (8) zum Empfangen der gesammelten Informationen (5) in der Prüfstation, und
Verarbeitungsmittel (4, 9) zum Verarbeiten der gesammelten Informationen (5) bereitgestellt sind.

10. Vorrichtung nach Anspruch 9, **dadurch gekennzeichnet, dass** die Sende- und Empfangsmittel Mittel für mobile Datenkommunikation umfassen.

11. Vorrichtung nach Anspruch 9, **dadurch gekennzeichnet, dass** die Sende- und Empfangsmittel für das Senden und Empfangen der gesammelten Informationen über einen Kommunikationssatelliten (7) eingerichtet sind.

## Revendications

1. Dispositif pour l'inspection du profil de la bande de roulement d'un pneumatique (2) d'un véhicule (1a, 1b), comprenant des moyens de capteur (3) pour collecter des informations (5) à la position du véhicule (1a, 1b) relatives à la profondeur de profil du pneumatique (2), **caractérisé en ce que** les moyens de capteur (3) sont adaptés pour être fixés d'une façon permanente au véhicule (1a, 1b).

2. Dispositif selon la revendication 1, **caractérisé en ce que** les moyens de capteur (3) sont sélectionnés dans le groupe comprenant des moyens de capteur optique, électrique, tactile et acoustique pour exécuter une mesure indirecte de la profondeur de profil.

3. Dispositif selon la revendication 1, **caractérisé en ce que** les moyens de capteur (3) comprennent une caméra pour exécuter une mesure indirecte de la profondeur de profil.

4. Dispositif selon l'une quelconque des revendications 1 à 3, **caractérisé en ce que** les moyens de capteur (3) sont logés dans un boîtier étanche aux poussières et étanche à l'humidité dans le voisinage immédiat du pneumatique (2).

5. Dispositif selon l'une quelconque des revendications 1 à 4, **caractérisé en ce qu'**il comprend en outre des moyens de capteur qui peuvent être couplés de façon permanente au pneumatique (2) dans le but de collecter des informations relatives à la pression du pneumatique (2).

6. Dispositif selon l'une quelconque des revendications 1 à 5, **caractérisé en ce que** les moyens de capteur (3) peuvent être couplés au moyen d'une interface à un réseau pour effectuer une communication de données.

7. Dispositif selon la revendication 6, **caractérisé en ce que** le réseau est sélectionné dans le groupe de réseaux pour effectuer une communication de données selon un protocole LIN, MOST ou IDB-1394.

8. Dispositif selon la revendication 6, **caractérisé en ce que** le réseau appartient au groupe de réseaux pour effectuer une communication de données selon un protocole CAN ou FlexRay.

9. Dispositif selon l'une quelconque des revendications 1 à 8, **caractérisé en ce qu'**il comprend:
des moyens d'émetteur (6, 7) pour transmettre les informations collectées (5) à une station d'inspection,
des moyens de récepteur (8) pour recevoir les informations collectées (5) à la station d'inspection, et
des moyens de traitement (4, 9) pour traiter les informations collectées (5).

10. Dispositif selon la revendication 9, **caractérisé en ce que** les moyens d'émetteur et de récepteur comprennent des moyens pour effectuer une communication de données mobile.

11. Dispositif selon la revendication 9, **caractérisé en ce que** les moyens d'émetteur et de récepteur sont adaptés pour transmettre et recevoir les informations collectées par l'intermédiaire d'un satellite de communication (7).
